# EUROPEAN PATENT SPECIFICATION

(11) **EP 3 299 431 B1**
(45) Date of publication and mention of the grant of the patent: **24.06.2020**
(21) Application number: 17190776.9
(22) Date of filing: 13.09.2017
(51) Int. Cl.: C09J 123/12, C08L 23/14, C08L 51/06

(54) **HOTMELT ADHESIVE BASED ON POLYPROPYLENES**
HEISSSCHMELZKLEBSTOFF BASIEREND AUF POLYPROPYLENEN
ADHÉSIF THERMOFUSIBLE À BASE DE POLYPROPYLÈNES

(30) Priority: 14.09.2016 US 201662394296 P
(43) Date of publication of application: 28.03.2018
(73) Proprietor: H.B. Fuller Company, St. Paul, Minnesota 55164-0683 (US)
(72) Inventor: JOAQUIM, SERRA, 4350 - 127 Porto (PT)
(74) Representative: Hansen, Norbert

(56) References cited:
- US-A1- 2010 173 168
- US-A1- 2014 358 100
- US-A1- 2016 102 230

## Description

### FIELD OF THE INVENTION

The present invention relates to a hotmelt adhesive composition comprising at least one tackifying resin and a high amount of a mixture of at least one single-site catalyzed propylene homopolymer and at least one propylene copolymer. The invention further relates to an article comprising the hotmelt adhesive and to the use of the hotmelt adhesive in woodworking, assembly or coating of textiles. The invention also relates to a method of bonding a first base material to a second base material by means of the hotmelt adhesive.

### BACKGROUND OF THE INVENTION

Hotmelt adhesives are solvent-free adhesives and have the characteristic that instant bonding and high-speed bonding can be achieved since adhesiveness is exhibited after the adhesive is melted by heating and coated onto an adherend, followed by cooling to solidify the adhesive, and therefore has been used in a wide range of fields. At present, various hot melt adhesives for use in various applications have been developed and supplied to the market.

Adhesive composition components such as base polymers, tackifiers, waxes, functionalized polyolefins and oils are customarily provided as separate components for formulation into hotmelt adhesive compositions. In woodworking and related applications (e.g., to adhere wood boards and prepare final wood-based products), hotmelt adhesive compositions are sought that provide a desired combination of properties such as stable adhesion over time indicative of broad application temperature ranges, and a long open time.

Amorphous poly-α-olefin (APAO) based materials have the main role in the present polyolefin market in woodworking applications. US2016/0102230A1 discloses hotmelt adhesive compositions suitable for woodworking and related fields, which compositions comprise propylene polymers and APAO based polymers. With APAO based polymers, it is possible to achieve acceptable heat resistance and adhesion properties e.g. to polyolefin based decorative films being used in the woodworking industry in surface lamination or profile wrapping. Main issues with APAOs are related with residual tack of the polymer creating agglomeration problems, high softening points which imply high application temperatures and a low setting speed.

Attempts have been made to address some of the above problems by using metallocene technology based polymeric materials. However, such hotmelt adhesives often have low viscosity levels, poor heat resistance of the bonded materials or poor setting characteristics, and thus are not sufficiently adapted to the needs of the woodworking industry and related applications.

There is a need in the art for hotmelt adhesive compositions being free from agglomeration problems, being residual tack free, being applicable at lower application temperatures, having a long open-time, good adhesion properties, a fast setting and a good cold and heat resistance of the bonded materials.

The object of the present invention is to meet the above needs.

### SUMMARY OF THE INVENTION

The present invention provides a hotmelt adhesive composition comprising, based on the total weight of the composition:
(i) 15 to 35% by weight of at least one tackifying resin, and
(ii) 60 to 85% by weight of a mixture of at least one single-site catalyzed propylene homopolymer (A) and at least one propylene copolymer (B),
wherein
the propylene homopolymer (A) has a weight average molecular weight of 40,000 to 140,000, the propylene copolymer (B) has an ethylene comonomer content of 5 to 15% by weight, and the weight ratio of propylene homopolymer (A) to propylene copolymer (B) is 1:1 to 5:1 .

The present invention also provides an article comprising a first base material and a second base material, and a layer of the above hotmelt adhesive composition in-between the first and second base material.

Furthermore, the present invention relates to the use of the above hotmelt adhesive composition in woodworking, assembly or coating of textiles.

In addition, the present invention provides a method of bonding a first base material to a second base material, the method comprising the steps of melting the above hotmelt adhesive, coating the adhesive on at least one base material, and bonding the other base material to the coated hot melt adhesive.

Further embodiments of the present invention are described in the following detailed description and the appended claims.

### DETAILED DESCRIPTION OF THE INVENTION

As outlined above, the hotmelt adhesive composition according to the present invention comprises 15 to 35% by weight of at least one tackifying resin and 60 to 85% by weight of a mixture of at least one single-site catalyzed propylene homopolymer (A) and at least one propylene copolymer (B), based on the total weight of the composition.

The term *"single-site catalyzed"* as known in the art refers to propylene homopolymers or copolymers obtained from polyolefin polymerization catalysts having a single catalytic site. Single-site polyolefin polymerization catalysts are employed in the art for the provision of uniform polymers tailored structures and physical properties such as a narrow molecular weight distribution. Example of single-site catalysts include metallocene catalysts.

The hotmelt adhesive composition according to the present invention is free of residual tack and thus is free of agglomeration problems experienced with prior art hotmelt adhesives. Furthermore, the hotmelt adhesive of the invention features are long open-time, good adhesion properties with a relatively fast set and good cold and heat resistance of the bonded materials. In addition, the hotmelt adhesives according to the invention have a low softening point are therefore can be used at lower application temperatures.

Further advantages of the inventive hot melt adhesives include a high content of polymers and thus a lower dependency on the availability of resins. Moreover, the hotmelt adhesives of the present invention exhibit a low density and are suitable for reliably bonding a variety of materials. The hotmelt adhesive is especially suited in the woodworking field and is also related with other areas of application, such as assembly or coating of textiles. The hotmelt adhesive can be applied e.g. by a slot nozzle or a roller.

The propylene homopolymer (A) employed in the inventive hotmelt adhesives has a weight average molecular weight of 40,000 to 140,000. Molecular weights are determined in accordance with the invention based on ASTM D 5396-11. In a preferred embodiment, the propylene homopolymer (A) has a weight average molecular weight of 30,000 to 145,000, more preferably of 45,000 to 130,000. The propylene homopolymer (A) is obtained from a single-site catalyst and preferably has a polydispersity (Weight Average Molecular Weight (Mw)/Number Average Molecular Weight (Mn)) of 2.5 or less, more preferably of 2.4 or less.

Furthermore, the propylene homopolymer (A) may have a density measured according to ISO1183 of 0.86 to 0.88 g/cm³. In preferred embodiments, the propylene homopolymer (A) has a density of 0.865 to 0.875 g/cm³. The softening point of the propylene homopolymer (A) measured according to ISO4625 may range from 85 to 130°C, such as 90 to 125°C. The melt flow rate of the propylene homopolymer (A) measured according to ASTM D 1238 at 230°C under a load of 2.16 kg typically ranges from 40 to 2,500 g/10min, more preferably from 45 to 2,200 g/10min. In addition, the propylene homopolymer (A) typically has a viscosity measured according to ASTM D 3236 at 190°C of 7,000 to 380,000 mPa·s, more preferably 8,000 to 370,000 mPa·s, such as 10,000 to 200,000 mPa·s, or 15,000 to 100,000 mPa·s.

Propylene homopolymers for use in the present invention are available on the market. Illustrative examples of suitable propylene homopolymers (A) include but are not limited to metallocene catalyzed propylene homopolymers of the L-MODU series marketed by Idemitsu, such as L-MODU S 400, L-MODU S600 or L-MODU S901.

In a preferred embodiment of the present invention, the propylene homopolymer (A) is a mixture of a first propylene homopolymer (A1) and a second propylene homopolymer (A2). The first propylene homopolymer (A1) preferably has a softening point measured according to ISO4625 of 85 to 100°C, such as 90 to 95°C. Moreover, the first propylene homopolymer preferably has a melt flow rate measured according to ASTM D 1238 at 230°C under a load of 2.16 kg of 1,500 to 2,500 g/10min, such as 1,800 to 2,200 g/10min. The viscosity of the first propylene homopolymer (A1) measured according to ASTM D 3236 at 190°C preferably ranges from 6,000 to 10,000 mPa·s, such as 7,500 to 9,000 mPa·s. Furthermore, the first propylene homopolymer (A1) may have a weight average molecular weight 30,000 to 60,000, such as 40,000 to 50,000.

The second propylene homopolymer (A2) according to this preferred embodiment may have a softening point measured according to ISO4625 of 115 to 125°C. The melt flow rate of the second propylene homopolymer (A2) measured according to ASTM D 1238 at 230°C under a load of 2.16 kg may range from 40 to 80 g/10min, such as 45 to 60°C. The viscosity of the second propylene homopolymer (A2) measured according to ASTM D 3236 at 190°C preferably ranges from 300,000 to 380,000 mPa·s, such as 320,000 to 370,000 mPa·s. The second propylene homopolymer typically has a higher molecular weight, such as a weight average molecular weight of 115,000 to 145,000, more preferably 120,000 to 140,000.

The weight ratio of first propylene homopolymer (A1) to second propylene homopolymer (A2) according to this preferred embodiment typically is 7:1 to 15:1 . In a more preferred embodiment, the weight ratio of first propylene homopolymer (A1) to second propylene homopolymer (A2) is 10:1 to 12:1.

According to the present invention, a propylene copolymer (B) is further employed in the mixture of polypropylenes. The polypropylene copolymer (B) is a propylene-ethylene copolymer and has an ethylene comonomer content of 5 to 25% by weight. Preferably, the propylene copolymer (B) has an ethylene comonomer content of 5 to 15%, more preferably of 8 to 14% by weight, even more preferably of 11 to 13% by weight. In one embodiment, the propylene copolymer (B) is a single-site catalyzed propylene copolymer.

The propylene copolymer (B) typically may have a density measured according to ISO1183 of 0.85 to 0.89 g/cm³, such as 0.860 to 0.870 g/cm³. Furthermore, the viscosity of the propylene copolymer (B) measured according to ASTM D 3236 at 190°C may range e.g. from 500 to 20,000, from 1,000 to 15,000, from 2,000 to 10,000, or even from 4,000 to 9,000 mPa·s.

Single-site propylene-ethylene copolymers for use in the hotmelt adhesives of the invention are available on the market. Illustrative examples of suitable propylene copolymers (B) include but are not limited to metallocene catalyzed propylene-ethylene copolymers of the Vistamaxx series marketed by ExxonMobil, such as Vistamaxx 8380.

The mixture of the at least one single-site catalyzed propylene homopolymer (A), such as the mixture of first propylene homopolymer (A1) and second propylene homopolymer (A2) described above, and the at least one propylene copolymer (B) is employed in the inventive hotmelt adhesive compositions in an amount of 60 to 85% by weight, based on the total weight of the adhesive composition, preferably in an amount of 60 to 80% by weight, such as 70 to 80% by weight. The weight ratio of propylene homopolymer (A), such as the mixture of first propylene homopolymer (A1) and second propylene homopolymer (A2) described above, to propylene copolymer (B) in the hotmelt adhesive compositions of the invention is 1:1 to 5:1 . In a preferred embodiment, the weight ratio of propylene homopolymer (A) to propylene copolymer (B) is 2:1 to 4:1

The hotmelt adhesive composition according to the present invention further comprises 15 to 35% by weight, based on the total weight of the hotmelt adhesive composition, of tackifying resins. In a preferred embodiment, the amount of tackifier in the hot melt adhesive composition is 15 to 30% by weight, such as 15 to 25% by weight. Examples of the tackifying resin are known in the art and include e.g. materials which are composed of a rosin derivative resin, a polyterpene resin, a hydrocarbon resin, including modified hydrocarbon resins, an oil-soluble phenolic resin, or the like and are in the form of a solid, a semi-solid, or a liquid at normal temperature. In a preferred embodiment, the tackifying resin is a hydrocarbon resin, more preferably an aliphatic hydrocarbon resin, including modified aliphatic hydrocarbon resins, such as non-modified aliphatic hydrocarbon resins and aromatic modified aliphatic hydrocarbon resins. The at least one tackifying resin may have a softening point measured according to ASTM E-28 of e.g. 85 to 130°C. Furthermore, the glass transition temperature measured according to ISO 11357-2 of the tackifying resin may range e.g. from 40 to 80°C.

In a preferred embodiment, the tackifying resin is a partially or fully hydrogenated hydrocarbon resin including aromatic modified hydrocarbon resins having an aromaticity measured by ¹H-NMR of up to 15%. Tackifying resins for use in the present invention are available on the market. Illustrative examples include but are not limited to resins of the Escorez series, such as Escorez 5690, marketed by ExxonMobil, or resins of the Arkon series, such as Arkon P-125, marketed by Arakawa.

In a preferred embodiment, the tackifying resin is a mixture of a first tackifying resin (T1) and a second tackifying resin (T2). According to this preferred embodiment, the first tackifying resin (T1) may have a softening point measured according to ASTM E-28 of 105 to 140°C, or even 120 to 130°C. It is also preferred that the first tackifying resin (T1) has a glass transition temperature measured according to ISO 11357-2 of 70 to 80°C. In a preferred embodiment, the first tackifying resin (T1) is a hydrocarbon resin, more preferably, an aliphatic hydrocarbon resin, such as a non-modified aliphatic hydrocarbon resin.

The second tackifying resin (T2) according to this preferred embodiment may have a softening point measured according to ASTM E-28 of e.g. 80 to 100°C, or even 80 to 95°C. The second tackifying resin e.g. may be an aromatic modified hydrocarbon resin, such as cycloaliphatic hydrocarbon resin having an aromaticity measured by ¹H-NMR of 5 to 15 mol%. It is further preferred that the second tackifying resin according to this preferred embodiment has a glass transition temperature measured according to ISO 11357-2 of 40 to 50°C. In a preferred embodiment, the second tackifying resin (T2) is a hydrocarbon resin, more preferably an aliphatic hydrocarbon resin, still more preferably an aromatic modified aliphatic hydrocarbon resin.

The weight ratio of first tackifying resin (T1) to second tackifying resin (T2) in this preferred embodiment is preferably 0.5:1 to 2:1, more preferably 0.7:1 to 1.5:1.

In one embodiment the propylene homopolymer, propylene copolymer and tackifying agent make up at least 85 % by weight of the hotmelt adhesive composition. Preferably, the propylene homopolymer, propylene copolymer and tackifying agent make up at least 90 % by weight of the hotmelt adhesive composition.

The hotmelt adhesive composition according to the present invention may further comprise a functionalized polyolefin. The functionalized polyolefin can be a wax. The term *"functionalized polyolefin"* is used herein to refer to polyolefins having polar functional groups, such as maleic anhydride-modified polypropylene and maleic anhydride-modified polypropylene wax. An illustrative commercially available functionalized polyolefin wax is Honeywell AC-596P. AC-596P is polypropylene-maleic anhydride copolymer from Honeywell. The functionalized polyolefin is preferably present in the inventive hotmelt adhesive in an amount of up to 10%, preferably up to 5% by weight, preferably 1 to 10 % by weight, more preferably 2 to 4% by weight, based on the total weight of the composition.

The hotmelt adhesive composition according to the invention can be formulated without the use of wax. If wax is used, the amount is limited to maximize open time and adhesion. In an embodiment, the hot melt adhesive composition includes no greater than 8 % by weight wax, preferably no greater than 5 % by weight wax.

The hotmelt adhesive composition according to the invention can be formulated without the use of plasticizers and thus preferably is free of plasticizers. In a preferred embodiment, the hotmelt adhesive composition comprises, preferably consists essentially of, 15 to 25% by weight of the at least one tackifying resin, such as the mixture e of first tackifying resin (T1) and second tackifying resin (T2) described above, 60 to 80% by weight of the mixture of at least one single-site catalyzed propylene homopolymer (A), such as the mixture of first propylene homopolymer (A1) and second propylene homopolymer (A2) described above, and at least one propylene copolymer (B), wherein the weight ratio of propylene homopolymer (A) to propylene copolymer (B) is 3:1 to 4:1; and 2 to 4% by weight of maleic anhydride modified polypropylene, and is free of plasticizers.

The hotmelt adhesive composition according to the present invention may have a Brookfield viscosity measured according to ASTM D 3236 at 150°C of 15,000 to 30,000 mPa·s, such as 17,500 to 27,500 mPa·s. Furthermore, the hotmelt adhesive composition preferably has a softening point measured according to ASTM E 28 of 95 to 110°C. Typical densities of the inventive hotmelt composition measured according to ISO1183 may range from 0.88 to 0.90 g/cm³. The hotmelt adhesive may have a long open-time of e.g. 5 minutes or more, such as about 5 to 10 minutes. Furthermore, the hotmelt adhesive may exhibit a heat resistance of bonded material of up to 110°C, such as up to 100°C, and a cold resistance of up to -35°C, such as up to -30°C.

The hotmelt adhesive may further contain usual additives such as stabilizers or antioxidants in minor amounts. The hot melt adhesive of the present invention can be produced as known in the art, e.g. by dry blending the tackifying resin, the mixture of at least one single-site catalyzed propylene homopolymer (A) and at least one propylene copolymer (B), and optionally the functionalized polyolefin and additives using e.g. a Henschel mixer or the like, and melt-kneading the components using a single-screw or twin-screw extruder, a Plast mill, a Banbury mixer, or the like.

The present invention also relates to an article comprising the inventive hotmelt adhesive. Thus, the present invention relates to an article comprising a first base material and a second base material and a layer of the inventive hotmelt adhesive composition in-between the first and second base material. Suitable base materials can be selected from a variety of substrates. Preferably, one of the base materials is wood or a wood related material.

The present invention further provides a method of bonding a first base material to a second base material, the method comprising the steps of melting the hotmelt adhesive according to the invention, coating the adhesive on at least one base material, and bonding the other base material to the coated hot melt adhesive. In a preferred embodiment, one of the base materials is wood or a wood related material.

The hotmelt adhesive of the present invention can be employed in various end uses. Thus, the present invention also relates to the use of the inventive hotmelt adhesive composition in e.g. woodworking, assembly or coating of textiles. In a preferred embodiment, the hotmelt adhesive is used in woodworking, such as surface lamination or profile wrapping.

In particular, the hotmelt adhesive formulations disclosed herein can be used in various woodworking applications including, but not limited to furniture (e.g., edge banding, profile wrapping), toys, musical instruments, window frames and sills, doors, flooring, fencing, tools, ladders, sporting goods, dog houses, gazebos/decks, picnic tables, playground structures, planters, scaffolding planks, kitchen utensils, coffins, church pews/altars, canes, and coated textiles. The adhesive formulations described herein, having a high polymer load, provide a desired combination of physical properties such as stable adhesion over time, indicative of broad application temperature ranges, and a long open time and therefore can be used in a variety of woodworking and related applications. It should be appreciated that the adhesive formulations of the present disclosure, while being well suited for use in woodworking products, may also find utility in other applications as well.

In a particular embodiment, a woodworking process to prepare the woodworking application involves forming a woodworking article by applying the hotmelt adhesive composition to at least a portion of a structural element. The structural element can include a variety of materials, which include, but are not limited to wood or plywood, or plastic or veneer. For example, the structural element can also include lumber, wood, fiberboard, chipboard, plasterboard, gypsum, wallboard, plywood, PVC, melamine, polyester, impregnated paper and sheetrock, plastic decorative foils, such as PVC, PP and ABS. A woodworking process can be used to form indoor furniture, outdoor furniture, trim, molding, doors, sashes, windows, millwork and cabinetry, for example.

### Examples

### Methods:

Brookfield viscosity is determined according to ASTM D 3236 at 150°C using spindle 27 at 20 rpm.

The softening point is determined according to ASTM E 28.

Open time refers to the period of time between the application of glue in, at least, one of the surfaces to be bonded and the joining of the parts, followed by the application of pressure, during which the glue surfaces are exposed to air before being put in contact with the other surfaces and during which a satisfactory connection can still be achieved. The open time is determined according to a HB Fuller internal method in comparative examples and inventive example alike.

Density is determined according to ISO1183.

The bonding quality is evaluated after the bonded samples have been aged and pulled as follows:
1 - no strength and adhesion failure to substrate
2 - some strength and partial or total adhesion failure to substrate (70 - 100%)
3 - some strength and partial adhesion failure to substrate (30 - 70%) or cohesive failure of the hotmelt film
4 - good bonding strength and partial adhesion failure to substrate (10 - 30%) or cohesive failure of the hotmelt film
5 - very good bonding strength and partial cohesive failure of substrates (70 - 100%)

Peel strength is determined with a dynamometer at a speed of 100 mm/min after laminating a foil of an unprimed PVC foil with 0.4 mm thickness to the surface of a wooden chipboard panel; the bonding was allowed to age for 8 days prior to the peel strength determination. The sample width was 2.5 cm.

The shear adhesion failure temperature (SAFT) determination is based on the standard method ASTM D 4498-07. Test conditions are based on the bonding of an unprimed PVC with a thickness of 0.4 mm to beech wood; bonding area is 2.5 x 2.5 cm²; temperature rate of 5 °C/ 15 min; and a weight of 445 g.

The shore A hardness is determined according to DIN ISO 7619-1

### Materials:

L-MODU S 400 is a metallocene catalyzed propylene homopolymer having a softening point of 93°C, available from Idemitsu.

L-MODU S 901 is a metallocene catalyzed propylene homopolymer having a softening point of 120°C, available from Idemitsu.

Vistamaxx 8380 is a metallocene catalyzed propylene copolymer having an ethylene content of 12% by weight, available from ExxonMobil.

Arkon P-125 is a hydrogenated aliphatic hydrocarbon resin from Arakawa Technical.

Escorez 5690 is an aromatic modified hydrogenated hydrocarbon resin from ExxonMobil.

A-C 596P is a polypropylene maleic anhydride copolymer from Honeywell.

CWF 101 wax is ethylene homopolymer wax from Zell Chemie Internacional, S.L.

### Additives:

Irganox® 1010 is a sterically hindered phenolic antioxidant from BASF.

Irgafos® 168 is a di-tertiary butyl phenyl phosphite from BASF.

DHT 4A is an acid and a halogen scavenger from Kisuma Chemicals.

The comparative examples were prepared by mixing the components according to the following table 1. In table 1, the amounts are given in percent by weight, based on the total weight of the hotmelt adhesive composition.

**Table 1:**

| | **Comparative Example CE1** | **Comparative Example CE2** |
|---|---|---|
| L-MODU S 400 | 72.5 | - |
| L-MODU S 901 | 7.5 | - |
| Vistamaxx 8380 | - | 80.0 |
| Arkon P-125 | 12.6 | 12.6 |
| Escorez 5690 | - | - |
| A-C 596P | 3.0 | 3.0 |
| CWF-101 Wax | 4.0 | 4.0 |
| Additives | 0.4 | 0.4 |

Furthermore, working examples according to the invention were prepared by mixing the components according to the following table 2. In table 2, the amounts are again given in percent by weight, based on the total weight of the hotmelt adhesive composition.

**Table 2:**

| | **Inventive Example IE1** | **Inventive Example IE2** | **Inventive Example IE3** |
|---|---|---|---|
| L-MODU S 400 | 53.5 | 40.0 | 55,0 |
| L-MODU S 901 | - | - | 5,0 |
| Vistamaxx 8380 | 25.0 | 38.5 | 17,5 |
| Arkon P-125 | 9.0 | 9.0 | 11,0 |
| Escorez 5690 | 9.0 | 9.0 | 11,0 |
| A-C 596P | 3.0 | 3.0 | - |
| CWF-101 Wax | - | - | - |
| Additives | 0.5 | 0.5 | 0.5 |

The above comparative examples were evaluated according to the characteristics shown in the following table 3:

**Table 3:**

| | **CE1** | **CE2** |
|---|---|---|
| Viscosity [mPa·s] | 24,500 | 11,500 |
| Softening point [°C] | 105 | 111 |
| Open time | 60-62 s | 30-32 s |
| Density [g/cm³] | 0.88 | 0.86 |
| Bonding quality (unprimed PP; +21°C) | 2 | 4 |
| Bonding quality (unprimed PVC; +21°C) | 4 | 4 |
| Bonding quality (unprimed PVC; +3°C) | 3 | 4 |
| Peel strength [N/mm] | 1.2^{a} | 0.4^{b} |
| SAFT [°C] | 90 | 80 |
| Shore A hardness | 85 | 60 |

| | | |
|---|---|---|
| ^{a} substrate cohesive failure ^{b} adhesive cohesive failure | | |

The evaluation results of the working examples according to the invention are shown in the following table 4:

**Table 4:**

| | **IE1** | **IE2** | **IE3** |
|---|---|---|---|
| Viscosity [mPa·s] | 17,000 | 16,000 | 22,000 |
| Softening point [°C] | 105 | 108 | 94 |
| Open time | 5 min | > 3 min | > 6 min |
| Density [g/cm³] | - | - | - |
| Bonding quality (unprimed PP; +21°C) | 2-3 | 4 | 4 |
| Bonding quality (unprimed PVC; +21°C) | - | - | - |
| Bonding quality (unprimed PVC; +3°C) | - | - | - |
| Peel strength [N/mm] | - | - | - |
| SAFT [°C] | 90 | 85 | 90 |
| Shore A hardness | 81 | 76 | 80 |

The hotmelt adhesives according to the present invention exhibit an improved balance of properties, including at the same time a suitable viscosity, a lower softening point, a longer open-time, and good bonding quality, especially with respect to polypropylene (PP), which is one of the main targeted substrates, improved SAFT and adjusted hardness.

## Claims

1. A hotmelt adhesive composition comprising, based on the total weight of the composition:
(i) 15 to 35% by weight of at least one tackifying resin, and
(ii) 60 to 85% by weight of a mixture of at least one single-site catalyzed propylene homopolymer (A) and at least one propylene copolymer (B), wherein
the propylene homopolymer (A) has a weight average molecular weight of 40,000 to 140,000,
the propylene copolymer (B) has an ethylene comonomer content of 5 to 25% by weight, and
the weight ratio of propylene homopolymer (A) to propylene copolymer (B) is from 1:1 to 5:1.

2. The hotmelt adhesive composition according to claim 1, wherein the propylene homopolymer (A) has
a density measured according to ISO1183 of 0.86 to 0.88 g/cm³, preferably 0.865 to 0.875 g/cm³; and/or
a softening point measured according to ISO4625 of 85 to 130°C, preferably 90 to 125°C; and/or
a melt flow rate measured according to ASTM D 1238 at 230°C under a load of 2.16 kg of 40 to 2,500 g/10min, preferably 45 to 2,200 g/10min; and/or
a viscosity measured according to ASTM D 3236 at 190°C of 7,000 to 380,000 mPa·s, preferably 8,000 to 370,000 mPa·s, more preferably 10,000 to 200,000 mPa·s, still more preferably 15,000 to 100,000 mPa·s; and/or
a weight average molecular weight of 30,000 to 145,000, preferably 45,000 to 130,000; and/or
a molecular weight distribution (Mw/Mn) of 2.5 or less, preferably 2.4 or less.

3. The hotmelt adhesive composition according to claim 1 or 2, wherein the propylene copolymer (B) has
an ethylene comonomer content of 5 to 14% by weight, preferably 8 to 14% by weight; and/or
a density measured according to ISO1183 of 0.85 to 0.89 g/cm³, preferably 0.860 to 0.870 g/cm³; and/or
a viscosity measured according to ASTM D 3236 at 190°C of 1,000 to 15,000 mPa·s, preferably 2,000 to 10,000 mPa·s.

4. The hotmelt adhesive composition according to any one of claims 1 to 3, wherein the tackifying resin
is a hydrogenated hydrocarbon resin; and/or
has a softening point measured according to ASTM E-28 of 85 to 130°C; and/or
has an aromaticity measured by ¹H-NMR of up to 15%; and/or
has a glass transition temperature measured according to ISO 11357-2 of 40 to 80°C.

5. The hotmelt adhesive according to any one of claims 1 to 4, wherein the tackifying resin is a mixture of a first tackifying resin (T1) and a second tackifying resin (T2), wherein
the first tackifying resin (T1) has a softening point measured according to ASTM E-28 of 105 to 140°C and a glass transition temperature measured according to ISO 11357-2 of 70 to 80°C, and
the second tackifying resin (T2) has a softening point measured according to ASTM E-28 of 80 to 100°C, an aromaticity measured by ¹H-NMR of 5 to 15% and a glass transition temperature measured according to ISO 11357-2 of 40 to 50°C, and
wherein the weight ratio of first tackifying resin (T1) to second tackifying resin (T2) is 0,5 to 2, preferably 0.7 to 1.5.

6. The hotmelt adhesive composition according to any one of claims 1 to 5, wherein the composition further comprises a functionalized polyolefin, preferably maleic anhydride modified polypropylene, and wherein the functionalized polyolefin is preferably present in an amount of up to 10% by weight, more preferably 1 to 10% by weight, based on the total weight of the composition.

7. The hotmelt adhesive composition according to any one of claim 1 to 6, wherein the propylene homopolymer (A) is a mixture of a first propylene homopolymer (A1) and a second propylene homopolymer (A2), wherein
the first propylene homopolymer (A1) has a softening point measured according to ISO4625 of 85 to 100°C, a melt flow rate measured according to ASTM D 1238 at 230°C under a load of 2.16 kg of 1,500 to 2,500 g/10min, a viscosity measured according to ASTM D 3236 at 190°C of 6,000 to 10,000 mPa·s and a weight average molecular weight 30,000 to 60,000; and
the second propylene homopolymer (A2) has a softening point measured according to ISO4625 of 115 to 125°C, a melt flow rate measured according to ASTM D 1238 at 230°C under a load of 2.16 kg of 40 to 80 g/10min, a viscosity measured according to ASTM D 3236 at 190°C of 300,000 to 380,000 mPa·s and a weight average molecular weight of 115,000 to 145,000; and
wherein the weight ratio of first propylene homopolymer (A1) to second propylene homopolymer (A2) is 7:1 to 15:1, preferably 10:1 to 12:1.

8. The hotmelt adhesive composition according to any one of claims 1 to 7, wherein the composition comprises, based on the total weight of the composition
(i) 15 to 25% by weight of the at least one tackifying resin,
(ii) 60 to 80% by weight of the mixture of at least one single-site catalyzed propylene homopolymer (A) and at least one propylene copolymer (B), wherein the weight ratio of propylene homopolymer (A) to propylene copolymer (B) is 2:1 to 4:1; and
(iii) 2 to 4% by weight of maleic anhydride modified polypropylene,
wherein the composition is free of plasticizers.

9. The hotmelt adhesive composition according to any one of claims 1 to 8, wherein the composition comprises, based on the total weight of the composition
(i) 15 to 25% by weight of the at least one tackifying resin,
(ii) 60 to 80% by weight of the mixture of at least one single-site catalyzed propylene homopolymer (A) and at least one propylene copolymer (B), wherein the weight ratio of propylene homopolymer (A) to propylene copolymer (B) is 2:1 to 4:1;
and wherein the composition comprises no greater than 5 % by weight of a wax.

10. The hotmelt adhesive composition according to any one of claims 1 to 9, wherein the composition has
a Brookfield viscosity measured according to ASTM D 3236 at 150°C of 15,000 to 30,000 mPa·s, preferably 17,500 to 27,500 mPa·s;
a softening point measured according to ASTM E 28 of 95 to 110°C; and
a density of measured according to ISO1183 of 0.88 to 0.90 g/cm³.

11. Article comprising a first base material and a second base material and a layer of the hotmelt adhesive composition according to any one of claims 1 to 10 in-between the first and second base material.

12. Article according to claim 11, wherein one of the base materials is wood.

13. Use of a hotmelt adhesive composition as defined in any one of claims 1 to 10 in woodworking, assembly or coating of textiles.

14. The use according to claim 13 in woodworking.

15. The use according to claim 14 for surface lamination or profile wrapping.

16. A method of bonding a first base material to a second base material, comprising the steps of melting the hotmelt adhesive according to any one of claims 1 to 10, coating the adhesive on at least one base material, and bonding the other base material to the coated hot melt adhesive.

17. The method according to claim 16, wherein one of the base materials is wood.

## Patentansprüche

1. Schmelzklebstoffzusammensetzung, umfassend, bezogen auf das Gesamtgewicht der Zusammensetzung:
(i) 15 bis 35 Gew.-% mindestens eines klebrig machenden Harzes und
(ii) 60 bis 85 Gew.-% eines Gemisches aus mindestens einem Single-Site katalysierten Propylenhomopolymer (A) und mindestens einem Propylencopolymer (B),
wobei
das Propylenhomopolymer (A) ein Gewichtsmittel des Molekulargewichts von 40.000 bis 140.000 aufweist,
das Propylencopolymer (B) einen Ethylen-Comonomer-Gehalt von 5 bis 25 Gew.-% aufweist, und
das Gewichtsverhältnis von Propylenhomopolymer (A) zu Propylencopolymer (B) von 1:1 bis 5:1 beträgt.

2. Schmelzklebstoffzusammensetzung gemäß Anspruch 1, wobei das Propylenhomopolymer (A) aufweist
eine nach ISO1183 gemessene Dichte von 0,86 bis 0,88 g/cm³, vorzugsweise 0,865 bis 0,875 g/cm³; und/oder
einen nach ISO4625 gemessenen Erweichungspunkt von 85 bis 130°C, vorzugsweise 90 bis 125°C; und/oder
einer Schmelzflussrate, gemessen nach ASTM D 1238 bei 230°C unter einer Last von 2,16 kg von 40 bis 2.500 g/10min, vorzugsweise 45 bis 2.200 g/10min, und/oder
eine nach ASTM D 3236 bei 190°C gemessene Viskosität von 7.000 bis 380.000 mPa·s, vorzugsweise 8.000 bis 370.000 mPa·s, noch bevorzugter 10.000 bis 200.000 mPa·s, noch bevorzugter 15.000 bis 100.000 mPa·s; und/oder
ein Gewichtsmittel des Molekulargewichts von 30.000 bis 145.000, vorzugsweise 45.000 bis 130.000; und/oder
eine Molekulargewichtsverteilung (Mw/Mn) von 2,5 oder weniger, vorzugsweise 2,4 oder weniger.

3. Schmelzklebstoffzusammensetzung gemäß Anspruch 1 oder 2, wobei das Propylencopolymer (B) aufweist
einen Ethylen-Comonomer-Gehalt von 5 bis 14 Gew.-%, vorzugsweise 8 bis 14 Gew.-%; und/oder
eine nach ISO1183 gemessene Dichte von 0,85 bis 0,89 g/cm³, vorzugsweise 0,860 bis 0,870 g/cm³; und/oder
eine nach ASTM D 3236 bei 190°C gemessene Viskosität von 1.000 bis 15.000 mPa·s, vorzugsweise 2.000 bis 10.000 mPa·s.

4. Schmelzklebstoffzusammensetzung gemäß einem der Ansprüche 1 bis 3, wobei das klebrig machende Harz
ein hydriertes Kohlenwasserstoffharz ist; und/oder
einen Erweichungspunkt, gemessen nach ASTM E-28, von 85 bis 130°C aufweist; und/oder
eine durch ¹H-NMR gemessene Aromatizität von bis zu 15% aufweist; und/oder
eine nach ISO 11357-2 gemessene Glasübergangstemperatur von 40 bis 80°C aufweist.

5. Schmelzklebstoff gemäß einem der Ansprüche 1 bis 4, wobei das klebrig machende Harz eine Mischung aus einem ersten klebrig machenden Harz (T1) und einem zweiten klebrig machenden Harz (T2) ist, wobei
das erste klebrig machende Harz (T1) einen Erweichungspunkt, gemessen nach ASTM E-28, von 105 bis 140°C und eine Glasübergangstemperatur, gemessen nach ISO 11357-2, von 70 bis 80°C aufweist, und
das zweite klebrig machende Harz (T2) einen Erweichungspunkt, gemessen nach ASTM E-28, von 80 bis 100°C, eine Aromatizität, gemessen durch ¹H-NMR, von 5 bis 15% und eine Glasübergangstemperatur, gemessen nach ISO 11357-2, von 40 bis 50°C aufweist, und
wobei das Gewichtsverhältnis des ersten klebrig machenden Harzes (T1) zum zweiten klebrig machenden Harz (T2) 0,5 bis 2, vorzugsweise 0,7 bis 1,5, beträgt.

6. Schmelzklebstoffzusammensetzung gemäß einem der Ansprüche 1 bis 5, wobei die Zusammensetzung weiterhin ein funktionalisiertes Polyolefin, vorzugsweise Maleinsäureanhydrid-modifiziertes Polypropylen, umfasst und wobei das funktionalisierte Polyolefin vorzugsweise in einer Menge von bis zu 10 Gew.-%, noch bevorzugter 1 bis 10 Gew.-%, bezogen auf das Gesamtgewicht der Zusammensetzung, vorliegt.

7. Schmelzklebstoffzusammensetzung gemäß einem der Ansprüche 1 bis 6, wobei das Propylenhomopolymer (A) ein Gemisch aus einem ersten Propylenhomopolymer (A1) und einem zweiten Propylenhomopolymer (A2) ist, wobei
das erste Propylenhomopolymer (A1) einen Erweichungspunkt, gemessen nach ISO4625, von 85 bis 100°C, eine Schmelzflussrate, gemessen nach ASTM D 1238 bei 230°C unter einer Last von 2,16 kg, von 1.500 bis 2.500 g/10min, eine Viskosität, gemessen nach ASTM D 3236 bei 190°C, von 6.000 bis 10.000 mPa·s und ein Gewichtsmittel des Molekulargewichts von 30.000 bis 60.000 aufweist; und
das zweite Propylenhomopolymer (A2) einen Erweichungspunkt, gemessen nach ISO4625, von 115 bis 125°C, eine Schmelzflussrate, gemessen nach ASTM D 1238 bei 230°C unter einer Last von 2,16 kg, von 40 bis 80 g/10min, eine Viskosität, gemessen nach ASTM D 3236 bei 190°C, von 300.000 bis 380.000 mPa·s und ein Gewichtsmittel des Molekulargewichts von 115.000 bis 145.000 aufweist; und
wobei das Gewichtsverhältnis des ersten Propylenhomopolymer (A1) zum zweiten Propylenhomopolymer (A2) 7:1 bis 15:1, vorzugsweise 10:1 bis 12:1, beträgt.

8. Schmelzklebstoffzusammensetzung gemäß einem der Ansprüche 1 bis 7, wobei die Zusammensetzung, bezogen auf das Gesamtgewicht der Zusammensetzung, umfasst
(i) 15 bis 25 Gew.-% des mindestens einen klebrig machenden Harzes,
(ii) 60 bis 80 Gew.-% des Gemisches aus mindestens einem Single-Site katalysierten Propylenhomopolymer (A) und mindestens einem Propylencopolymer (B), wobei das Gewichtsverhältnis von Propylenhomopolymer (A) zu Propylencopolymer (B) 2:1 bis 4:1 beträgt; und
(iii) 2 bis 4 Gew.-% mit Maleinsäureanhydrid modifiziertes Polypropylen, wobei die Zusammensetzung frei von Weichmachern ist.

9. Schmelzklebstoffzusammensetzung gemäß einem der Ansprüche 1 bis 8, wobei die Zusammensetzung, bezogen auf das Gesamtgewicht der Zusammensetzung, umfasst
(i) 15 bis 25 Gew.-% des mindestens einen klebrig machenden Harzes,
(ii) 60 bis 80 Gew.-% der Mischung aus mindestens einem Single-Site katalysierten Propylenhomopolymer (A) und mindestens einem Propylencopolymer (B), wobei das Gewichtsverhältnis von Propylenhomopolymer (A) zu Propylencopolymer (B) 2:1 bis 4:1 beträgt; und wobei die Zusammensetzung nicht mehr als 5 Gew.-% eines Wachses umfasst.

10. Schmelzklebstoffzusammensetzung gemäß einem der Ansprüche 1 bis 9, wobei die Zusammensetzung aufweist
eine nach ASTM D 3236 bei 150°C gemessene Brookfield-Viskosität von 15.000 bis 30.000 mPa·s, vorzugsweise 17.500 bis 27.500 mPa·s;
einen nach ASTM E 28 gemessenen Erweichungspunkt von 95 bis 110°C; und
eine nach ISO1183 gemessene Dichte von 0,88 bis 0,90 g/cm³.

11. Artikel, umfassend ein erstes Basismaterial und ein zweites Basismaterial und eine Schicht der Schmelzklebstoffzusammensetzung nach einem der Ansprüche 1 bis 10 zwischen dem ersten und dem zweiten Basismaterial.

12. Artikel nach Anspruch 11, wobei eines der Basismaterialien Holz ist.

13. Verwendung einer Schmelzklebstoffzusammensetzung nach einem der Ansprüche 1 bis 10 bei der Holzbearbeitung, Montage oder Beschichtung von Textilien.

14. Verwendung gemäß Anspruch 13 bei der Holzverarbeitung.

15. Verwendung gemäß Anspruch 14 für Oberflächenlaminierung oder Profilummantelung.

16. Verfahren zum Verbinden eines ersten Basismaterials mit einem zweiten Basismaterial, umfassend die Schritte des Schmelzens des Schmelzklebstoffs nach einem der Ansprüche 1 bis 10, des Auftragens des Klebstoffs auf mindestens ein Basismaterial und des Verbindens des anderen Basismaterials mit dem beschichteten Schmelzklebstoff.

17. Verfahren gemäß Anspruch 16, wobei eines der Grundmaterialien Holz ist.

## Revendications

1. Une composition adhésive thermofusible comprenant, par rapport au poids total de la composition :
(i) de 15 à 35% en poids d'au moins une résine collante, et
(ii) de 60 à 85% en poids d'un mélange d'au moins un homopolymère de propylène catalysé à site unique (A) et d'au moins un copolymère de propylène (B),
l'homopolymère de propylène (A) a un poids moléculaire moyen en poids de 40000 à 140000,
le copolymère de propylène (B) a une teneur en comonomère d'éthylène allant de 5 à 25% en poids, et
le rapport pondéral de l'homopolymère de propylène (A) et du copolymère de propylène (B) est de 1:1 à 5:1.

2. La composition adhésive thermofusible selon la revendication 1, dans laquelle l'homopolymère de propylène (A) a
une densité mesurée selon ISO1183 allant de 0,86 à 0,88 g/cm³, de préférence de 0,865 à 0,875 g/cm³ ; et / ou
un point de ramollissement mesuré selon ISO4625 allant de 85 à 130° C, de préférence de 90 à 125° C ; et / ou
un indice de fluidité à chaud mesuré selon ASTM D 1238 à 230° C sous une charge de 2,16 kg allant de 40 à 2500 g/10 min, de préférence de 45 à 2200 g/10 min ; et / ou
une viscosité mesurée selon ASTM D 3236 à 190° C de 7000 à 380000 mPa·s, de préférence de 8000 à 370000 mPa·s, de façon encore préférée de 10000 à 200000 mPa·s, de façon encore préférée de 15000 à 100000 mPa·s ; et / ou
un poids moléculaire moyen en poids de 30000 à 145000, de préférence de 45000 à 130000 ; et / ou
une distribution de poids moléculaire (Mw/Mn) de 2,5 ou moins, de préférence de 2,4 ou moins.

3. La composition adhésive thermofusible selon la revendication 1 ou la revendication 2, dans laquelle le copolymère de propylène (B) a
une teneur en comonomère d'éthylène allant de 5 à 14% en poids, de préférence allant de 8 à 14% en poids ; et / ou
une densité mesurée selon ISO1183 allant de 0,85 à 0,89 g/cm³, de préférence allant de 0,860 à 0,870 g/cm³ ; et / ou
une viscosité mesurée selon ASTM D 3236 à 190° C allant de 1000 à 15000 mPa·s, de préférence allant de 2000 à 10000 mPa·s.

4. La composition adhésive thermofusible selon l'une quelconque des revendications 1 à 3, dans laquelle la résine collante
est une résine hydrocarbonée hydrogénée ; et / ou
a un point de ramollissement mesuré selon ASTM E-28 allant de 85 à 130° C ; et / ou
a une aromaticité mesurée par RMN 1H allant jusqu'à 15% ; et / ou
a une température de transition vitreuse mesurée selon ISO 11357-2 allant de 40 à 80° C.

5. L'adhésif thermofusible selon l'une quelconque des revendications 1 à 4, dans lequel la résine collante est un mélange d'une première résine collante (T1) et d'une deuxième résine collante (T2),
la première résine collante (T1) a un point de ramollissement mesuré selon ASTM E-28 allant de 105 à 140° C et une température de transition vitreuse mesurée selon ISO 11357-2 allant de 70 à 80° C, et
la deuxième résine collante (T2) a un point de ramollissement mesuré selon ASTM E-28 allant de 80 à 100° C, une aromaticité mesurée par RMN H1 allant de 5 à 15% et une température de transition vitreuse mesurée selon ISO 11357-2 allant de 40 à 50° C, et
le rapport pondéral de la première résine collante (T1) à la deuxième résine collante (T2) est de 0,5 à 2, de préférence de 0,7 à 1,5.

6. La composition adhésive thermofusible selon l'une quelconque des revendications 1 à 5, dans laquelle la composition comprend en outre une polyoléfine fonctionnalisée, de préférence du polypropylène modifié à l'anhydride maléique, et dans laquelle la polyoléfine fonctionnalisée est de préférence présente en une quantité allant jusqu'à 10% en poids, de façon encore préférée allant de 1 à 10% en poids, par rapport au poids total de la composition.

7. La composition adhésive thermofusible selon l'une quelconque des revendications 1 à 6, dans laquelle l'homopolymère de propylène (A) est un mélange d'un premier homopolymère de propylène (A1) et d'un deuxième homopolymère de propylène (A2),
le premier homopolymère de propylène (A1) ayant un point de ramollissement mesuré selon ISO4625 allant de 85 à 100° C, un indice de fluidité à chaud mesuré selon ASTM D 1238 à 230° C sous une charge de 2,16 kg allant de 1500 à 2500 g/10 min, une viscosité mesurée selon ASTM D 3236 à 190° C allant de 6000 à 10000 mPa·s et un poids moléculaire moyen en poids allant de 30000 à 60000 ; et
le deuxième homopolymère de propylène (A2) a un point de ramollissement mesuré selon ISO4625 allant de 115 à 125° C, un indice de fluidité à chaud mesuré selon ASTM D 1238 à 230° C sous une charge de 2,16 kg allant de 40 à 80 g/10min, une viscosité mesurée selon ASTM D 3236 à 190° C allant de 300000 à 380000 mPa·s et un poids moléculaire moyen en poids allant de 115000 à 145000 ; et
le rapport pondéral du premier homopolymère de propylène (A1) au deuxième homopolymère de propylène (A2) est de 7:1 à 15:1, de préférence de 10:1 à 12:1.

8. La composition adhésive thermofusible selon l'une quelconque des revendications 1 à 7, dans laquelle la composition comprend, par rapport au poids total de la composition
(i) de 15 à 25% en poids de ladite au moins une résine collante,
(ii) de 60 à 80% en poids du mélange d'au moins un homopolymère de propylène catalysé à site unique (A) et d'au moins un copolymère de propylène (B), le rapport pondéral de l'homopolymère de propylène (A) au copolymère de propylène (B) étant de 2:1 à 4:1 ; et
(iii) de 2 à 4% en poids de polypropylène modifié à l'anhydride maléique, la composition étant exempte de plastifiants.

9. La composition adhésive thermofusible selon l'une quelconque des revendications 1 à 8, la composition comprenant, par rapport au poids total de la composition
(i) de 15 à 25% en poids de ladite au moins une résine collante,
(ii) de 60 à 80% en poids du mélange d'au moins un homopolymère de propylène catalysé à site unique (A) et d'au moins un copolymère de propylène (B), le rapport pondéral de l'homopolymère de propylène (A) au copolymère de propylène (B) étant de 2:1 à 4:1 ; et la composition ne comprend pas plus de 5% en poids d'une cire.

10. La composition adhésive thermofusible selon l'une quelconque des revendications 1 à 9, dans laquelle la composition a
une viscosité Brookfield mesurée selon ASTM D 3236 à 150° C allant de 15000 à 30000 mPa·s, de préférence allant de 17500 à 27500 mPa·s ;
un point de ramollissement mesuré selon ASTM E 28 allant de 95 à 110° C ; et une densité mesurée selon ISO1183 allant de 0,88 à 0,90 g/cm³.

11. Article comprenant un premier matériau de base et un deuxième matériau de base et une couche de la composition adhésive thermofusible selon l'une quelconque des revendications 1 à 10 entre le premier et le deuxième matériau de base.

12. Article selon la revendication 11, dans lequel l'un des matériaux de base est le bois.

13. Utilisation d'une composition adhésive thermofusible telle que définie dans l'une quelconque des revendications 1 à 10 dans le travail du bois, l'assemblage ou l'enduction de textiles.

14. L'utilisation selon la revendication 13 dans le travail du bois.

15. L'utilisation selon la revendication 14 pour le laminage de surface ou l'enveloppement de profil.

16. Un procédé de liaison d'un premier matériau de base à un deuxième matériau de base, comprenant les étapes consistant à fondre l'adhésif thermofusible selon l'une quelconque des revendications 1 à 10, à appliquer l'adhésif sur au moins un matériau de base et à coller l'autre matériau de base à l'adhésif thermofusible appliqué.

17. Le procédé selon la revendication 16, dans lequel l'un des matériaux de base est le bois.
